# NEUE EUROPÄISCHE PATENTSCHRIFT

(11) **EP 0 392 440 B2**
(45) Veröffentlichungstag und Bekanntmachung des Hinweises auf die Entscheidung über den Einspruch: **10.11.1999**
(45) Hinweis auf die Patenterteilung: 20.07.1994
(21) Anmeldenummer: 90106816.3
(22) Anmeldetag: 10.04.1990
(51) Int. Cl.: F16K 11/00, F16K 11/072, F16K 3/08

(54) **Absperrarmatur**
Shut-off armature
Armature d'arrêt

(30) Priorität: 12.04.1989 HU 176089
(43) Veröffentlichungstag der Anmeldung: 17.10.1990
(73) Patentinhaber: KLUDI-ARMATUREN PAUL SCHEFFER, D-58730 Fröndenberg (DE); Kerox Aluminiumoxyd Keramik Ges.m.b.H., A-7053 Hornstein (AT)
(72) Erfinder: Scheffer, Paul, D-5750 Menden (DE); Bolgar, György, D-8330 Eggenfelden (DE); Vidor, Gyozo, H-1221 Budapest (HU)
(74) Vertreter: Fritz, Edmund Lothar, Dipl.-Chem.

(56) Entgegenhaltungen:
- EP-A- 0 008 757
- EP-A- 0 071 779
- EP-A- 0 146 480
- CH-A- 574 067
- DE-A- 3 100 495
- DE-A- 3 714 450
- DE-A- 3 827 469

## Beschreibung

Die Erfindung bezieht sich auf eine Absperrarmatur, insbesondere für die Verwendung in Wasserleitungssystemen mit den Merkmalen nach dem Oberbegriff des einzigen Patentanspruchs. Eine derartige Absperrarmatur ist aus der DE-A-38 27 469 bekannt.

Ventile dieser Art dienen nicht nur zur Absperrung von Wasserleitungssystemen sondern auch zur Regelung des Wasserstromes. Zur Regelung dient dabei eine sogenannte Keramik-Flachdichtung bestehend aus einer Durchflußscheibe und einer Steuerscheibe mit Durchflußöffnungen, die derart gestaltet sind, daß durch Verdrehen der Steuerscheibe eine mehr oder weniger große Wassermenge durchfließen kann. Dabei setzt sich eine solche Armatur zusammen aus einem Gehäuseoberteil mit einer Spindel, zur Drehung der Steuerscheibe und aus einem die Wasserzuführung enthaltenden Gehäuseunterteil. Diese beiden Teile sind durch Verschraubung verbunden. Die Durchflußscheibe und die Steuerscheibe und gegebenenfalls ein Geräuschdämpfereinsatz sind in einem Scheibengehäuse untergebracht, welches als eigenes Bauteil ausgebildet ist.

Bei einem aus der DE-A 31 00 495 bekannten Gehäuseoberteil ist ein die beiden keramischen Scheiben aufnehmendes Scheibengehäuse gegenüber dem die Spindel aufnehmenden Teil zwar als besonderes Bauteil ausgebildet, jedoch im Prinzip oben offen. Im übrigen hat bei dem bekannten Gehäuseoberteil das Scheibengehäuse einen Gewindestutzen zum Einschrauben in das Gehäuseunterteil. Eine besondere Abdichtung dieser Schraubverbindung ist nicht vorgesehen.

Bekannt ist weiterhin (EP-A 0 071 779) ein Mengenregulierventil mit einer keramischen Scheibensteuerung, die an dem Ventilsitz einer Armatur, in welche das Mengenregulierventil eingeschraubt ist, anschließt, wobei ein Dichtungselement sowohl am Ventilsitz als auch an der Festscheibe der Scheibensteuerung anliegt. Mit Hilfe eines in den Querschnitt des Dichtungselementes eingelagerten Tragkörpers wird versucht, den auf die Festscheibe wirkenden Druck trotz unterschiedlicher Einschraubtiefe gleichmäßig zu halten.

In der DE-A-38 27 469 wird ein Dichtungsring für Hähne offenbart, der mit einer flachen Ringfläche an einer Festscheibe einer keramischen Scheibensteuerung eines Ventiloberteils anliegt und mit einer gekrümmten Dichtfläche am Ventilsitz eines Hahnkörpers, in dem das Oberteil eingeschraubt ist. Die Kompression des Dichtungsringes wirkt sich entsprechend der Einschraubtiefe des Oberteils im gleichen Maße sowohl auf den Ventilsitz als auch auf die Festscheibe der Keramiksteuerung aus.

Gegenüber diesem Stand der Technik besteht die Erfindungsaufgabe darin, eine Absperrarmatur der in Rede stehenden Art so auszubilden, daß die keramischen Scheiben durch Verschmutzungen keine Beeinträchtigungen in ihrer Funktion erleiden und daß das Zusammendrücken der Keramikscheiben mit einer bestimmten Kraft gesichert wird.

Diese wird erfindungsgemäß durch eine Absperrarmatur mit den kennzeichnenden Merkmalen des einzigen Anspruchs gelöst.

Nach der Lösung des Anspruchs nimmt das Scheibengehäuse an der der Spindel zugewandten Seite ein sogenanntes Scheibendrehelement auf, das nicht nur die Aufgabe hat, die Drehbewegung der Spindel auf die Steuerscheibe zu übertragen, sondern darüberhinaus das Scheibengehäuse an dieser Seite abschließt und somit die Scheiben vor Verschmutzungen schützt. In dieser Form kann das Scheibengehäuse im Keramikbetrieb unter Beachtung höchster Sauberkeit montiert und zur Weitermontage an den metallverarbeitenden Betrieb geliefert werden, wo der Gefahr, daß dort Verschmutzungen durch Metallspäne eintreten weitgehend vorgebeugt ist.

Zur Vermeidung von Verschmutzungen dient auch eine untere Dichtung im Scheibengehäuse, die primär die Aufgabe hat, eine Verschraubung des Spindelgehäuses mit dem Gehäuseunterteil abzudichten. Diese Dichtung hat ein derartiges Profil, daß ein Flansch einen Druck auf die Durchflußscheibe ausübt, so daß die beiden Scheiben zur Erfüllung ihrer Funktion ständig mit dem erforderlichen Druck aufeinanderliegen. Dabei bleibt dieser Druck konstant, ohne daß er von dem Druck beeinflußt wird, welchen der Teil der Dichtung erleidet, der zur Abdichtung der Verschraubung dient. Der auf die Scheiben ausgeübte Druck wird somit durch die größere oder geringere Einschraubtiefe nicht beeinflußt.

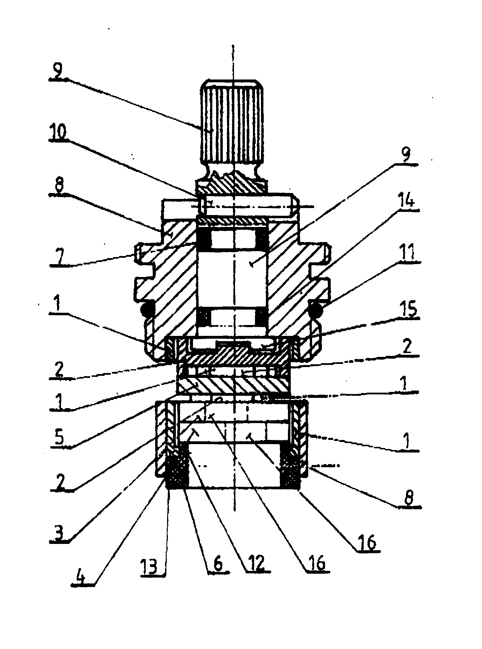

Auf der beiliegenden Zeichnung zeigt die Abbildung im Schnitt eine vorteilhafte Ausführungsform der erfindungsgemäßen Absperrarmatur.

Diese Absperrarmatur enthält ein Scheibengehäuse 1, ein Scheibendrehelement 2, eine Steuerscheibe 3, eine Durchflußscheibe 4, einen Geräuschdämpfungseinsatz 5, eine untere Dichtung 6, eine obere Spindeldichtung 7, ein Spindelgehäuse 8, eine Spindel 9, einen Bolzen 10, eine Außendichtung 11 und eine untere Spindeldichtung 14.

An dem der Spindel 9 gegenüberliegenden Ende des Scheibengehäuses 1 ist eine Schulter 13 ausgestaltet, zur Sicherung gegen Ausfall der im Scheibengehäuse 1 angeordneten Steuerscheibe 3 und Durchflußscheibe 4.

Das der Spindel 9 zugewandte Ende des Scheibengehäuses 1 ist durch das im Scheibengehäuse 1 verdrehbar angeordnete Scheibendrehelement 2 geschlossen. Dieses ist mit der Steuerscheibe 3 mechanisch verbunden.

Der Geräuschdämpfungseinsatz 5 ist neben der Steuerscheibe 3 angeordnet.

Die Spindel 9 ist im Spindelgehäuse 8 verdrehbar angeordnet und durch die obere Spindeldichtung 7 sowie durch die untere Spindeldichtung 14 gedichtet.

Die Außendichtung 11 dient zur Dichtung zwischen dem Spindelgehäuse 8 und dem nicht dargestellten, zur Wasserzuführung dienenden Unterteil des Hahnes.

Der Bolzen 10 stellt die Spindel 9 vor einer Längsverschiebung im Spindelgehäuse 8 sicher und begrenzt den Drehwinkel. Am dem Scheibengehäuse zugewandten Ende der Spindel 9 ist eine Mitnehmerschulter 15 ausgestaltet, die dem im Scheibengehäuse 1 verdrehbar angeordneten und mit der Steuerscheibe 3 mechanisch verbundenen Scheibendrehelement 2 angepaßt ist.

An der Seite des Scheibengehäuses 1 sowie des Spindelgehäuses 8 sind Öffnungen ausgestaltet zur Abführung des durch die Steuerscheibe 3 strömenden Wassers aus dem Spindelgehäuse 8.

Neben der Schulter 13, an der der Spindel 9 entgegengesetzten Seite des Scheibengehäuses 1 ausgestaltet ist, ist eine mit Flansch 12 versehene untere Dichtung 6 angeordnet derart, daß sich der Flansch 12 ins Scheibengehäuse 1 hineinragend der Durchflußscheibe 4 entgegenstemmt. Dadurch werden die Durchflußscheibe 4 und die Steuerscheibe 3 zusammengedrückt. Die Durchflußscheibe 4 ist im Scheibengehäuse 1 und das Scheibengehäuse 1 im Spindelgehäuse 8 gegen Verdrehung gesichert.

Die Arbeitsweise der Ausführungsform gemäß der Abbildung der erfindungsgemäßen Absperrarmatur ist wie folgt:

Mit dem Verdrehen der Spindel 9 kann durch die Mitnehmerschulter 15 und das Scheibendrehelement 2 die Steuerscheibe 3 verdreht werden, derart, daß die in der Steuerscheibe 3 sowie in der Durchflußscheibe 4 ausgestalteten Durchflußöffnungen 16 teils oder im Ganzen übereinander gebracht werden.

In diesem Falle beginnt die Wasserströmung durch die untere Dichtung 6, welche die Abdichtung zwischen der Wasserzuführung und der Durchflußscheibe sichert. Das Wasser strömt durch die in der Steuerscheibe 3 sowie in der Durchflußscheibe 4 ausgestalteten Durchflußöffnungen 16 und weiter durch den Geräuschdämpfungseinsatz 5. Danach strömt das Wasser aus dem Scheibengehäuse 1 sowie aus dem Spindelgehäuse 8 aus und fließt bekannterweise durch den Austrittsflansch des nicht dargestellten unteren Teils der Absperrarmatur.

Beim Verdrehen der Spindel 9 in entgegengesetzter Richtung wird die Deckung der in der Steuerscheibe 3 sowie der Durchflußscheibe 4 ausgestalteten Durchflußöffnungen 16 und so die Wasserströmung eingestellt.

Die die Dichtung der erfindungsgemäßen Absperrarmatur sichernde untere Dichtung 6 kann bei deren Einsetzung in den unteren Teil des Hahns beliebig zusammengedrückt werden. Die auf die untere Dichtung 6 wirkende Druckkraft wird von der Schulter 13 des Scheibengehäuses 1 aufgenommen und durch dieses auf das Spindelgehäuse 8 übertragen. Die Spannkraft zwischen der im Scheibengehäuse 1 angeordneten Steuerscheibe 3 und der Durchflußscheibe 4 wird praktisch ausschließlich durch den Flansch 12 der unteren Dichtung 6 gesichert. Sie kann daher aufgrund der gegebenen geometrischen Verhältnisse und Materialbeiwerten als konstant erachtet werden.

So beeinflußt die Einschraubtiefe des Spindelgehäuses 8 in dem nicht dargestellten Unterteil der Absperrarmatur also die Spannkraft zwischen der Steuerscheibe 3 und der Durchflußscheibe 4 nicht.

Es erhöht die Betriebssicherheit der erfindungsgemäßen Absperrarmatur, wenn der Einbau der Steuerscheibe 3, der Durchflußscheibe 4 ins Scheibengehäuse 1 sowie die Einsetzung des Geräuschdämpfungseinsatzes 5 und das Schließen des Scheibengehäuses 1 mit dem Scheibendrehelement 2 im Keramikbetrieb erfolgen kann, wo die Voraussetzungen einer Reinhaltung besser sind als in einer Werkstatt, wo die Montage der Metallbestandteile erfolgt. So ist die Gefahr der Verschmutzung der Anliegerflansche sowie der Steuerscheibe 3 und der Durchflußscheibe 4 viel geringer, praktisch ausgeschlossen. Bei der Montage erfolgt die Zusammensetzung der erwähnten Bestandteile bereits im Keramikbetrieb. Darauf folgend können die erwähnten Elemente bei der Montage der Metallbestandteile im geschlossenen Scheibengehäuse angeordnet als eine einzige kompakte Einheit behandelt werden. Mit Ausnahme der Einsetzung der durch das geschlossene Scheibengehäuse 1 gebildeten kompakten Einheit ins Spindelgehäuse 8 ist kein Arbeitsgang mehr durchzuführen.

Ein Vorteil der erfindungsgemäßen Absperrarmatur ist, daß deren Montage einfacher und ihre Betriebssicherheit besser ist, als bei den gegenwärtig zu ähnlichem Zweck verwendeten Absperrarmaturen. Es ist ein weiterer Vorteil, daß die zur Funktion der Absperrarmatur notwendige Vorspannung durch die geometrischen Maße und durch Wahl der Dichtungsmaterialgüte nachträglich unbeeinflußbar von der Endmontage eingestellt werden kann.

## Patentansprüche

1. Absperrarmatur, insbesondere für die Verwendung in Wasserleitungssystemen mit den Merkmalen:
- sie besteht aus einem die Wasserzuführung enthaltenden Gehäuseunterteil sowie einem Gehäuseoberteil in Form eines Spindelgehäuses (8), das eine im Spindelgehäuse gedichtet angeordnete Spindel (9) enthält;
- im Raum zwischen dem Gehäuseoberteil und dem Gehäuseunterteil sind eine aus Keramik bestehende drehfest angeordnete Durchflußscheibe (4) und eine ebenfalls aus Keramik bestehende bewegliche Steuerscheibe (3) übereinander angeordnet, sowie gegebenenfalls ein Geräuschdämpfereinsatz (5) über der Steuerscheibe (3);
- die Durchflußscheibe (4) und die Steuerscheibe (3) sowie gegebenenfalls der Geräuschdämpfereinsatz (5) sind in einem als eigenes Bauteil ausgebildeten, zweckmäßigerweise aus Kunststoff gefertigten, Scheibengehäuse (1) angeordnet;
- im Scheibengehäuse ist ein Scheibendrehelement (2) verdrehbar angeordnet, das sowohl mit der Spindel (9) als auch mit Steuerscheibe (3) in Verbindung steht;
- zur Abdichtung einer Schraubverbindung zwischen dem Spindelgehäuse (8) und dem Gehäuseunterteil an der der Spindel (9) gegenüberliegenden Seite des Scheibengehäuses (1) ist eine untere Dichtung (6) angebracht, die sich an einer zur Längsachse des Scheibengehäuses senkrechten Schulter (13) abstützt, und derart in das Scheibengehäuse (1) hineinragt, daß die Durchflußscheibe (4) gegen die Steuerscheibe (3) gedrückt wird;
gekennzeichnet durch die nachfolgend genannten Merkmale:
- das Scheibengehäuse (1) ist an der der Spindel (9) zugewandten Seite durch das Scheibendrehelement (2) abgeschlossen;
- die Dichtung (6) ragt mit einem die Durchflußscheibe (4) gegen die Steuerscheibe (3) mit einer gewissen Vorspannung druckenden Flansch (12), *der den an der Schulter (13) anliegenden Abschnitt der Dichtung (6) in Richtung auf die Durchflußscheibe (4) überragt,* derart in das Scheibengehäuse (1) hinein, daß die auf die untere Dichtung (6) beim Einschrauben wirkende Druckkraft von der Schulter (13) aufgenommen wird und der vom Flansch (12) ausgeübte Druck konstant bleibt.

## Claims

1. Shut-off armature, in particular for the use in water pipe system, having the following characteristics:
- it consists of a lower housing part containing the water supply as well as of an upper housing part in the shape of a spindle housing (8) containing a spindle (9) which is sealingly arranged in the spindle housing;
- in the space between the upper housing part and the lower housing part there are arranged one upon the other a stationary passage disc (4) consisting of ceramics and a movable control disc (3) likewise consisting of ceramics as well as possibly a soundproofing inset (5) above the control disc (3);
- the passage disc (4) and the control disc (3) as well as possibly the soundproofing inset (5) are arranged in a disc housing (1) formed as individual constructional part and made appropriately of plastics material;
- in the disc housing there is arranged a disc rotating element (2) in a rotatable manner which is connected both to the spindle (9) as well as to the control disc (3);
- for the purpose of sealing a screw connection between the spindle housing (8) and the lower housing part of the disc housing (1) at the side opposite to the spindle (9), a lower seal (6) is provided which is supported by a shoulder (13) extending vertically to the longitudinal axis of the disc housing, and which extends into the disc housing (1) in such a manner that the passage disc (4) is pressed against the control disc (3);
characterised by the following features:
- the disc housing (1) is closed at the side facing the spindle (9) by the disc rotating element (2);
- the seal (6) extends with a flange (12) into the disc housing (1) in such a manner that the pressure force acting on the lower seal (6) during screwing in is received by the shoulder (13) and the pressure exerted by the flange (12) remains constant, said flange presses the passage disc (4) against the control disc (3) with a certain prestress and extends over the section of the seal (6) contacting the shoulder (13) in the direction of the passage disc (4).

## Revendications

1. Armature d'arrêt, en particulier pour l'utilisation dans des systèmes de conduites d'eau avec les caractéristiques suivantes:
- elle est composée d'une partie de carter inférieure comprenant l'alimentation d'eau ainsi que d'une partie de carter supérieure en forme de carter de broche (8) qui contient une broche (9) disposée de manière étanche dans le carter de broche;
- dans l'espace situé entre la partie de carter supérieure et la partie de carter inférieure sont disposés l'un au-dessus de l'autre un disque de passage (4) en céramique monté à l'abri de la rotation et un disque de passage mobile (3) également en céramique ainsi que, le cas échéant, une pièce antibruit (5) située au-dessus du disque de commande (3);
- le disque de passage (4) et le disque de commande (3) ainsi que, le cas échéant, la pièce antibruit (5) sont disposés dans un carter de disques (1) constituant un élément de construction individuel, de préférence fabriqué en matière plastique;
- dans le carter de disques (1) est monté à rotation un élément de rotation (2) pour les disques, élément (2) qui est en communication tant avec la broche (9) qu'également avec le disque de commande (3);
- pour assurer, du côté du carter de disques (1) opposé à la broche (9), l'étanchéité d'une liaison de vissage entre le carter de broche (8) et la partie de carter inférieure, il est prévu un joint d'étanchéité inférieur (6), qui s'appuie sur un épaulement (13) perpendiculaire à l'axe longitudinal du carter de disques, et qui s'engage dans le carter de disques (1)de manière telle que le disque de passage (4) est appliqué sous pression sur le disque de commande (3), caractérisée par les caractéristiques ci-après:
- du côté orienté vers la broche (9), le carter de disques (1) est clôturé par l'élément de rotation (2) pour les disques;
- par une bride (12) appliquant sous une certaine précontrainte le disque de passage (4) sur le disque de commande (3), bride (12) qui dépasse en direction du disque de passage (4) le tronçon du joint d'étanchéité (6) appliqué sur l'épaulement (13), le joint d'étanchéité (6) s'engage dans le carter de disques (1) de manière telle que la force de pression agissant lors du vissage sur le joint d'étanchéité inférieur (6) est reprise par l'épaulement (13) et que la pression exercée par la bride (12) reste constante.
